# EUROPEAN PATENT APPLICATION

(11) **EP 4 773 274 A1**
(43) Date of publication of application: **08.07.2026**
(21) Application number: 25224755.6
(22) Date of filing: 18.12.2025
(51) Int. Cl.: H01M 10/04, H01M 10/0587, H01M 50/586, H01M 50/591

(54) **ELECTRODE AND SECONDARY BATTERY**

(30) Priority: 07.01.2025 KR 20250002197
(71) Applicant: SAMSUNG SDI CO., LTD., Yongin-si, Gyeonggi-do 17084 (KR)
(72) Inventor: Kim, Kyung Tae, 16678 Gyeonggi-do, Suwon-si (KR)
(74) Representative: Meissner Bolte Partnerschaft mbB

(57) **Abstract**

An electrode (400) includes an electrode plate (200) including a substrate (210) and an active material layer (220) located on a portion of the substrate (210). A protective layer (300) including two or more regions having different thicknesses is provided on the electrode plate (200).

## Description

### BACKGROUND

### 1. Field of the Invention

The present invention relates to an electrode and a secondary battery.

### 2. Discussion of Related Art

Secondary batteries are batteries that can be charged and discharged, unlike primary batteries that cannot be recharged. Low-capacity secondary batteries are used in small portable electronic devices such as smartphones, feature phones, laptop computers, digital cameras, and camcorders. High-capacity batteries are widely used as power sources for driving a motor, power storage batteries, and the like in hybrid vehicles, electric vehicles, and the like. Such secondary batteries include an electrode including a positive electrode and/or a negative electrode, an electrode assembly including the electrode, a case accommodating the electrode assembly, an electrode terminal connected to the electrode assembly, and the like.

The electrode includes a substrate and an active material layer formed on the substrate. The active material layer includes an active material. The electrode also includes a tab attached to the substrate. The electrode assembly including the electrode may be, for example, wound to form a jelly roll.

When a secondary battery is charged, the electrode may expand. As the electrode expands, it may press against other electrodes and/or an adjacent separator due to winding, or it may receive a force from the another electrode and/or the separator. Accordingly, the substrate may be deformed.

As the demand for high-capacity secondary batteries increases, the thinner substrate have been developed. But cracks may occur more easily in the thinner substrates. When a crack occurs in the electrode, the resistance of the secondary battery increases, heat is generated around the crack, and/or the capacity of the secondary battery decreases, all of which causes a decrease in the reliability of the secondary battery.

The above-described information disclosed in this section is only intended to improve understanding of the background of the present invention and therefore may include information that does not constitute related art.

### SUMMARY OF THE INVENTION

The present invention is directed to providing an electrode and a secondary battery wherein cracks do not form in the substrate. The present invention is also directed to providing an electrode and a secondary battery in which a thickness difference in an electrode plate is minimized.

However, technical problems to be solved by the present invention are not limited to the problems described above, and other problems not mentioned may be clearly understood by those skilled in the art from the description below.

According to the present invention, there is provided an electrode including an electrode plate including a substrate and an active material layer disposed on a portion of the substrate, and a protective layer including two or more regions formed with different thicknesses and provided on the electrode plate.

According to the present invention, there is provided a secondary battery including an electrode assembly formed by winding a first electrode, a second electrode, and a separator that is located between the first electrode and the second electrode and a case in which the electrode assembly is accommodated, wherein one or more of the first electrode and the second electrode may include an electrode plate including a substrate and an active material layer disposed on a portion of the substrate and a protective layer including two or more regions having different thicknesses and provided on the electrode plate.

### BRIEF DESCRIPTION OF THE DRAWINGS

The drawings attached illustrate exemplary embodiments of the present invention and further describe aspects and features of the present invention together with the detailed description. The present invention should not be construed as being limited to the drawings.
FIG. 1 is a cross-sectional view of a secondary battery according to an embodiment of the present invention;
FIG. 2 is a view of an electrode according to an embodiment of the present invention;
FIG. 3 is a view of an electrode according to an embodiment of the present invention;
FIG. 4 is a view of a protective layer according to an embodiment of the present invention;
FIG. 5 is a view of an electrode provided with the protective layer according to an embodiment of the present invention;
FIG. 6 is a view of a protective layer according to an embodiment of the present invention;
FIG. 7 is a view of a protective layer according to an embodiment of the present invention;
FIG. 8 is a view of an electrode provided with a protective layer according to an embodiment of the present invention;
FIG. 9 is a view of an electrode provided with a protective layer according to an embodiment of the present invention;
FIG. 10 is a view of a protective layer according to an embodiment of the present invention;
FIG. 11 is a view of an electrode provided with a protective layer according to an embodiment of the present invention;
FIG. 12 is a view of an electrode provided with a protective layer according to an embodiment of the present invention; and
FIG. 13 is a view of a protective layer according to an embodiment of the present invention.

### DETAILED DESCRIPTION OF EXEMPLARY EMBODIMENTS

Hereinafter, exemplary embodiments of the present invention will be described in detail with reference to the attached drawings. Terms or words used in this specification and claims should not be interpreted limited to ordinary or dictionary meanings and should be interpreted as meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some of the most exemplary embodiments of the invention and do not represent all of the technical ideas of the invention, and that there may be various equivalents and modifications that may replace them at the time of filing.

Furthermore, when used herein, the terms "comprise or include" and/or "comprising or including" specify the presence of the mentioned shapes, numbers, steps, operations, members, elements, and/or groups thereof and are not intended to exclude the presence or addition of one or more other shapes, numbers, steps, operations, members, elements, and/or groups thereof.

In addition, in order to help understand the invention, the attached drawings are not drawn to actual scale, and the dimensions of some components may be exaggerated. In addition, the same reference numbers may be assigned to the same components in different embodiments.

The statement that two objects for comparison are 'equal' means 'substantially the same.' Therefore, substantially the same may include deviations that are considered low in the art, for example, deviations of less than 5%. Additionally, uniformity of a parameter over a given region may mean uniformity from an average perspective.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the above components may be directly connected or coupled to each other, but it should be understood that other components may be "interposed" between each component, or each component may be "connected," "coupled," or "linked" through another component.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

The terminology used herein is for the purpose of describing embodiments of the present invention and is not intended to limit the present invention.

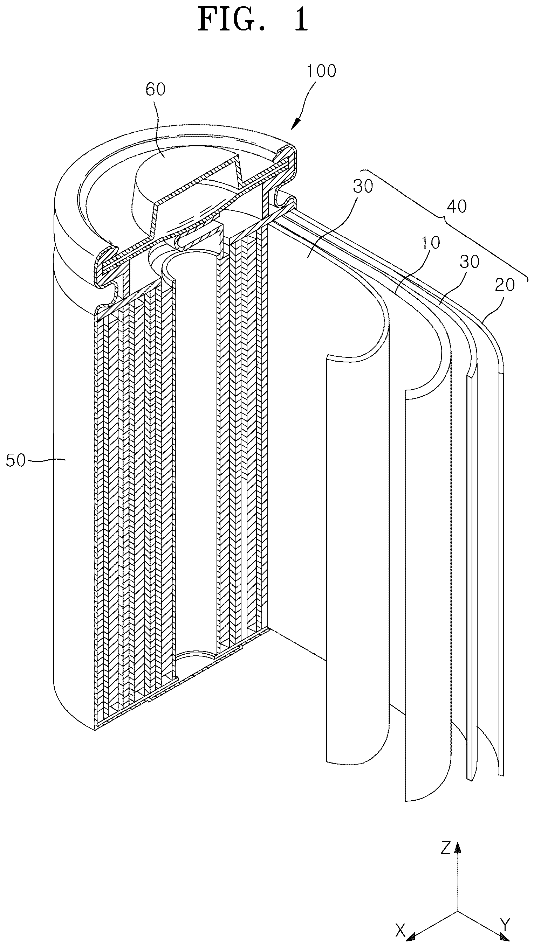

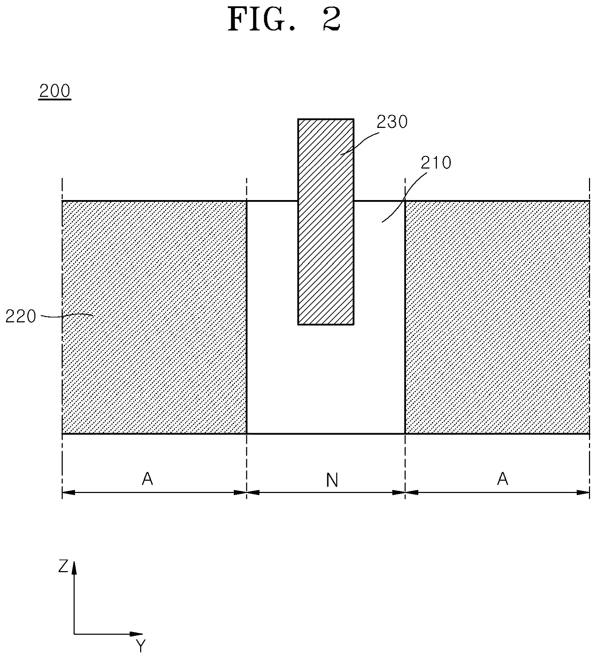

In this specification, a Z-axis direction represents a height direction of a secondary battery 100 as shown in FIG. 1. In addition, the Z-axis direction may represent a length direction of a tab 230 as shown in FIG.2. In this specification, an X-axis is perpendicular to the Z-axis. In addition, the X-axis direction may represent a thickness (height) direction of the tab 230. In this specification, a Y-axis is perpendicular to the Z-axis. In this specification, the Y-axis is perpendicular to the X-axis. In addition, the Y-axis direction may represent a width direction of the tab 230.

FIG. 1 is a cross-sectional view of a secondary battery according to an embodiment of the present invention.

As illustrated in FIG. 1, a lithium-ion secondary battery 100 according to an embodiment of the present invention may include a case 50, an electrode assembly 40, and a cap assembly 60. Additionally, the lithium-ion secondary battery 100 may further include a center pin (not shown) depending on the structure of the case 50. The cap assembly 60 may perform a current interrupt operation, and thus may be referred to as a current interrupt device.

In the depicted example, the case 50 is formed in a cylindrical shape. The case 50 may include a roughly circular bottom portion and a cylindrical side wall extending a predetermined length upward from a periphery of the bottom portion. During a manufacturing process of the secondary battery 100, the upper portion of the case 50 is open. During a process of assembling the secondary battery 100, the electrode assembly 40 and the center pin may be inserted into the case 50 together with an electrolyte. The case 50 may be made from, for example, steel, stainless steel, aluminum, an aluminum alloy, or an equivalent thereof. But the case 50 of the present invention is not limited to these examples.

The electrode assembly 40 may be accommodated inside the case 50. The electrode assembly 40 may include a negative electrode 20 in which a negative electrode active material (e.g., graphite, carbon, etc.) is coated on a negative electrode current collector plate. The electrode assembly 40 may also include a positive electrode 10 on which a positive electrode active material (e.g., transition metal oxide (LiCoO₂, LiNiO₂, LiMn₂O₄, etc.)) is coated on a positive electrode current collector plate. A separator 30 may be located between the negative electrode 20 and the positive electrode 10 to prevent a short circuit and allow only the movement of lithium ions. The negative electrode 20, the positive electrode 10, and the separator 30 may be wound in a roughly cylindrical shape.

The cap assembly 60 includes an upper cap. The cap assembly 60 may further include one or more of a lower cap, a vent, and an insulator. The cap assembly 60 is coupled to the case 50 to seal the electrode assembly 40 inside the case 50.

The case 50 according to embodiments of the present invention is not limited to the depicted example, and the case 50 may be configured in various shapes such as a circular shape or a pouch shape. In addition, the case 50 may be made of a metal such as aluminum, an aluminum alloy, or nickel-plated steel, or a laminate film or plastic forming a pouch.

As described above, the electrode assembly 40 includes the negative electrode 20, the positive electrode 10, and the separator 30 located between the negative electrode 20 and the positive electrode 10. The electrode assembly 40 is accommodated in the case 50 together with an electrolyte (not shown). Hereinafter, the electrode assembly 40 and the electrolyte will be described.

### Positive electrode 10

The positive electrode active material may be a compound capable of reversible intercalation and deintercalation of lithium (lithiated intercalation compound). More specifically, one or more of compound oxides of lithium and a metal selected from cobalt, manganese, nickel, iron, and combinations thereof may be used.

The composite oxide may be a lithium transition metal composite oxide. Specific examples thereof include lithium nickel-based oxides, lithium cobalt-based oxides, lithium manganese-based oxides, lithium iron phosphate-based compounds, cobalt-free nickel-manganese-based oxides, or a combination thereof. For example, a compound represented as any one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂GbO₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In these chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode 10 for a lithium secondary battery may include a positive electrode current collector and a positive electrode active material layer formed on the positive electrode current collector. The positive electrode active material layer may include a positive electrode active material, and the positive electrode active material layer may further include a binder and/or a conductive material.

The content of the positive electrode active material may be 90 wt% to 99 wt% based on 100 wt% of the positive electrode active material layer, and the content of each of the binder and the conductive material may be 0.5 wt% to 5 wt% based on 100 wt% of the positive electrode active material layer.

Al foil may be used as the positive electrode current collector, but the present invention is not limited thereto.

### Negative electrode 20

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite such as natural graphite or artificial graphite, and examples of the amorphous carbon may include soft carbon or hard carbon, mesophase pitch carbide, calcined coke, or the like.

A Si-based negative electrode active material or Sn-based negative electrode active material may be used as the material capable of doping and dedoping lithium. The Si-based negative electrode active material may include silicon, a silicon-carbon composite, SiOₓ (0 < x ≤ 2), an Si-based alloy, or a combination thereof.

The silicon-carbon composite may be a composite of silicon and amorphous carbon. According to an embodiment, the silicon-carbon composite may be in the form of silicon particles whose surfaces are coated with amorphous carbon.

The silicon-carbon composite may further include crystalline carbon. For example, the silicon-carbon composite may include a core including crystalline carbon and silicon particles and an amorphous carbon coating layer located on a surface of the core.

The negative electrode 20 for a lithium secondary battery 100 may include a negative electrode current collector and a negative electrode active material layer located on the negative electrode current collector. The negative electrode active material layer may include a negative electrode active material and may further include a binder and/or a conductive material. For example, the negative electrode active material layer may include 90 to 99.5 wt% of the negative electrode active material, 0.5 to 5 wt% of the binder, and 0 to 5 wt% of the conductive material.

The binder may include a non-aqueous binder, an aqueous binder, a dry binder, or a combination thereof. When the aqueous binder is used as the negative electrode binder, a cellulose-based compound capable of imparting viscosity may be further included.

The negative electrode current collector may be formed from copper foil, nickel foil, stainless steel foil, titanium foil, nickel foam, copper foam, a polymer substrate coated with a conductive metal, and a combination thereof.

An electrolyte for a lithium secondary battery 100 includes a non-aqueous organic solvent and a lithium salt.

The non-aqueous organic solvent acts as a medium through which ions involved in the electrochemical reaction of the battery can move. The non-aqueous organic solvent may be a carbonate-based solvent, an ester-based solvent, an ether-based solvent, a ketone-based solvent, an alcohol-based solvent, an aprotic solvent, or a combination thereof, and may be used alone or in combination of two or more thereof. In addition, when using the carbonate-based solvent, a cyclic carbonate and a chain carbonate may be mixed and used.

### Separator 30

Depending on the type of lithium secondary battery 100, the separator 30 may be present between the positive electrode 10 and the negative electrode 20. As the separator 30, polyethylene, polypropylene, polyvinylidene fluoride, or a multilayer film of two or more layers thereof may be used.

The separator 30 may include a porous substrate and an active material layer containing an organic material, an inorganic material, or a combination thereof located on one or both sides of the porous substrate.

The organic material may include a polyvinylidene fluoride-based polymer or a (meth) acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present invention is not limited to these examples.

The organic material and the inorganic material may be present as a mixture in a single coating layer. In other embodiments, the organic and inorganic materials may be present in a form in which a coating layer including the organic material and a coating layer including the inorganic material are stacked.

FIG. 2 is a view of an electrode according to an embodiment of the present invention.

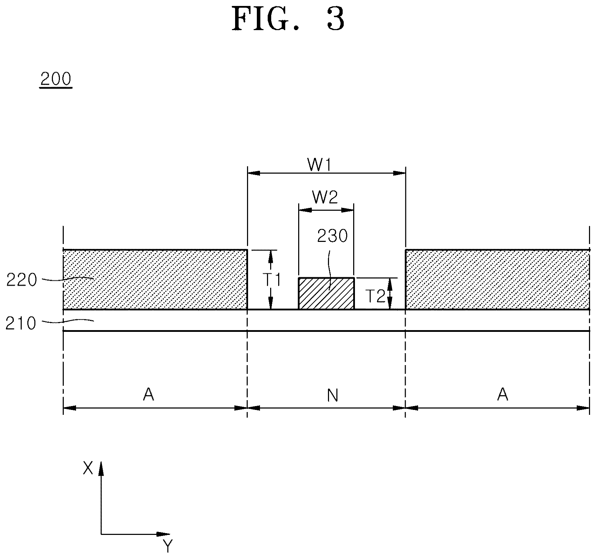

FIG. 3 is a view of an electrode according to an embodiment of the present invention.

In FIGS. 2 and 3, reference numeral 200 denotes the electrode plate according to an embodiment of the present invention.

The electrode plate 200 includes a substrate 210 and an active material layer 220 located on a portion of the substrate 210. But the components included in the electrode plate 200 are not limited to the components illustrated in FIGS. 2 and 3, and the electrode plate 200 may further include components in addition to the components illustrated in FIGS. 2 and 3.

Hereinafter, each component of the electrode plate 200 will be described in detail.

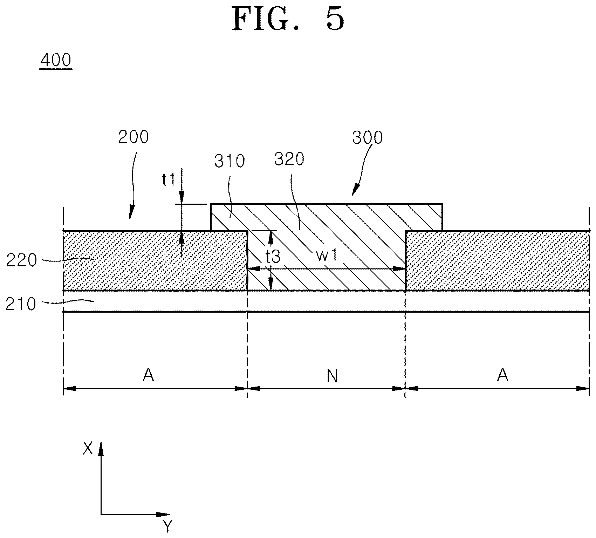

The electrode plate 200 is included in an electrode 400 (see FIG. 5). For example, the electrode 400 may be a positive electrode 10 and/or a negative electrode 20. When the electrode 400 corresponds to the positive electrode 10, the electrode plate 200 may be referred to as a positive electrode plate. When the electrode 400 corresponds to the negative electrode 20, the electrode plate 200 may be referred to as a negative electrode plate.

The electrode plate 200 includes the substrate 210 and the active material layer 220 provided on a portion of the substrate 210.

The substrate 210 includes the current collector as described above. For example, when the electrode plate 200 is a positive electrode plate, the substrate 210 includes a positive electrode current collector. In such embodiments, the positive electrode current collector may include aluminum (Al). When the electrode plate 200 is a negative electrode plate, the substrate 210 includes a negative electrode current collector. In such embodiments, the negative electrode current collector may include copper (Cu).

The active material layer 220 includes the active material layer as described above, and the active material layer 220 includes an active material. When the electrode plate 200 is a positive electrode plate, the active material includes a positive electrode active material. When the electrode plate 200 is a negative electrode plate, the active material includes a negative electrode active material. The active material layer 220 may further include a binder and/or a conductive material.

The active material layer 220 may be coated by being applied on the substrate 210 in the form of slurry including the active material. Alternatively, the active material layer 220 may be attached to the substrate 210 in the form of a freestanding film including the active material.

The active material layer 220 is provided on a portion of the substrate 210. For example, the active material layer 220 is provided on a portion of a surface of the substrate 210. In some embodiments, the active material layer 220 is provided at both sides of the substrate 210. A region of the substrate 210 on which the active material layer 220 is provided may be referred to as a coated portion A. The region of the substrate 210 where the active material layer 220 is not provided and the substrate 210 is exposed may be referred to as an uncoated portion N.

The electrode 400 further includes a tab 230 mounted on the substrate 210. For example, one side of the tab 230 is attached to the substrate 210. The tab 230 extends from one side toward the other side of the substrate 210, with one side of the tab 230 extending outward from the substrate 210.

As illustrated in FIG. 2, the tab 230 is provided in the middle between the active material layer 220 that is provided on both sides of the tab 230. In other embodiments, the tab 230 may be attached to an end portion of the substrate 210. Thus, the tab 230 may be provided at various positions on at least one side of the substrate 210.

The tab 230 provides a path for electrical connection between the electrode 400 and outside of the battery. To this end, the tab 230 includes a conductive material such as a metallic material. Accordingly, electrons may travel along the tab 230 to the electrode plate 200 and from the electrode plate 200 to outside of the battery.

The tab 230 is attached to the substrate 210. For example, the tab 230 may be attached to the substrate 210 through a conductive tape or adhesive material. When the tab 230 includes a metallic material, the tab 230 may be attached to the substrate 210 through welding.

As described above, the electrode plate 200 includes the substrate 210, the active material layer 220 and/or the tab 230. Accordingly, a step may form on the electrode plate 200. For example, in FIG. 3, T1 denotes a thickness of the active material layer 220. In this case, the thickness T1 of the active material layer 220 represents the shortest distance between one side (e.g., an upper surface) and the other side (e.g., a lower surface) of the active material layer 220 in the X-axis direction. And W1 denotes a length of the uncoated portion N. The length W1 of the uncoated portion N represents the shortest distance between one side and the other side of the uncoated portion N in the Y-axis direction. A step equal to the thickness T1 of the active material layer 220 is formed at a boundary between the coated portion A and the uncoated portion N by the active material layer 220. This step may be referred to as a first step.

In FIG. 3, T2 represents a thickness of the tab 230. The thickness T2 of the tab 230 represents the shortest distance between one side (e.g., an upper surface) and the other side (e.g., a lower surface) of the tab 230 in the X-axis direction. And W2 represents a width of the tab 230. The width W2 of the tab 230 represents the shortest distance between one side and the other side of the tab 230 in the Y-axis direction. A step equal to the thickness T2 of the tab 230 is formed between the tab 230 and the substrate 210 by the tab 230. This step may be referred to as a second step.

As described above, the electrode 400 may be repeatedly charged and discharged. When charging and discharging are repeated, each electrode 400 may apply a force to the adjacent electrode 400 (including, for example, the positive electrode 10 or the negative electrode 20) and/or separator 30. Alternatively, the electrode 400 may receive a force from the adjacent electrode 400 and/or separator 30. When this happens, a region in which the step is formed in the electrode 400 may receive a greater force from the outside or apply a greater force to the outside. As a result of the force, the electrode plate 200 and/or the electrode 400 including the electrode plate 200 may be damaged. Further, the lifetime of the secondary battery 100 including the electrode 400 may be shortened.

Hereinafter, a method of reducing the degree of degradation of the secondary battery 100 and/or delaying the degradation time is described, with the method being applicable even when a step formed on the electrode plate 200.

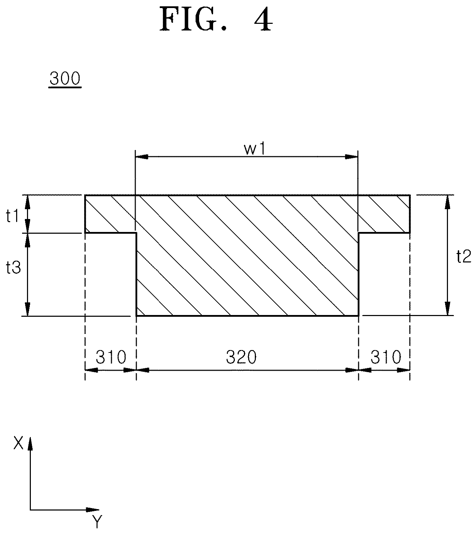

FIG. 4 is a view of a protective layer according to an embodiment of the present invention.

FIG. 5 is a view of an electrode provided with the protective layer according to an embodiment of the present invention.

A secondary battery 100 according to an embodiment of the present invention (including, for example, the secondary battery 100 described in FIGS. 1 to 3) includes an electrode 400. More specifically, the secondary battery 100 includes an electrode assembly 40 formed by winding a first electrode, a second electrode, and a separator 30 located between the first electrode and the second electrode, and a case 50 in which the electrode assembly 40 is accommodated. One or more of the first electrode and the second electrode include an electrode plate 200 that includes a substrate 210 and an active material layer 220 provided on a portion of the substrate 210. A protective layer 300 including two or more regions formed with different thicknesses is provided on the electrode plate 200.

In some embodiments, the first electrode includes a positive electrode 10 (including, for example, the positive electrode 10 described in FIGS. 1 to 3), and the second electrode includes a negative electrode 20 (including, for example, the negative electrode 20 described in FIGS. 1 to 3). In other embodiments, the first electrode includes the negative electrode 20 and the second electrode includes the positive electrode 10. The electrode 400 of the present invention may be applied to one or more of the first electrode and/or the second electrode.

The first electrode and/or the second electrode include the electrode plate 200 and the protective layer 300. For example, both the first electrode and the second electrode may include the electrode plate 200 provided with the protective layer 300. Alternatively, one of the first electrode and the second electrode may include the electrode plate 200 provided with the protective layer 300.

Hereinafter, the electrode 400 will be described in detail.

An electrode 400 according to one embodiment of the present invention includes an electrode plate 200 including a substrate 210 and an active material layer 220 provided on a portion of the substrate 210. A protective layer 300 including two or more regions formed with different thicknesses is provided on the electrode plate 200.

The electrode 400 may damage the adjacent electrode and/or separator 30 or may be damaged by the adjacent electrode and/or separator 30 by repeated charging and discharging. When this happens, a short circuit may occur between the electrodes 400 and/or the lifetime of the secondary battery 100 may be reduced.

The protective layer 300 may protect the electrode 400 from such risks. The protective layer 300 is provided on the electrode plate 200. For example, the protective layer 300 is attached to the electrode plate 200. As such, the protective layer 300 prevents at least a portion of the electrode plate 200 from being damaged by external pressure. In particular, as shown in FIG. 5, the protective layer 300 may prevent damage by being provided on the uncoated portion N and provided on a portion of the coated portion A by extending from the uncoated portion N.

As described above, the electrode plate 200 is often damaged in a region in where a step is formed. To protect against damage by the step, the protective layer 300 is provided to cover the step formed on the electrode plate 200. In some examples, the protective layer 300 may be provided while covering the first step and/or the second step formed on the electrode plate 200 that are described above.

As the protective layer 300 is provided on the electrode plate 200, a new step may be formed in the electrode plate 200 due to a thickness of the protective layer 300 itself. In this case, the step formed by the protective layer 300 may press the electrode plate 200 and thus may cause damage to the electrode plate 200. To address this issue, the protective layer 300 according to one embodiment of the present invention includes two or more regions formed with different thicknesses. Accordingly, a new step is not formed by the protective layer 300 due to the thickness of the protective layer 300 itself and/or the size of the newly formed step is minimized. Hereinafter, the two or more regions included in the protective layer 300 will be described in detail.

The protective layer 300 includes two or more regions having different thicknesses. The two or more regions include, for example, a first region 310 and a second region 320, as shown in FIG. 5.

The first region 310 is a region formed relatively thin in the protective layer 300. For example, the first region 310 is formed with a first thickness t1. In this case, the first thickness t1 represents the shortest distance between one surface and the other surface of the first region 310 in the X-axis direction. And the first thickness t1 is an average thickness of the first region 310.

In some examples, the first thickness t1 is less than or equal to 20 µm. In other examples, the first thickness t1 is less than or equal to 15 µm. In still further examples, the first thickness t1 is less than or equal to 10 µm, or the first thickness t1 is less than or equal to 5 µm. When the first thickness t1 is formed to be greater than 20 µm, a new step may be formed on the electrode plate 200 by the protective layer 300, and the protective layer 300 may apply pressure to a local region of the electrode plate 200. Thus, it is preferable that the first thickness t1 is formed to be less than or equal to 20 *µ*m.

In still further embodiments, the first thickness t1 is greater than or equal to 1.0 µm, greater than or equal to 1.5 µm, greater than or equal to 2.0 µm, greater than or equal to 2.5 µm, or greater than or equal to 3.0 µm. When the first thickness t1 is formed to be less than 1.0 µm, the protective layer 300 may be torn or damaged by an external impact. In this case, the protective layer 300 may not protect the electrode plate 200. Thus, it is preferable that the first thickness t1 is formed to be greater than or equal to 1.0 µm.

The second region 320 is a region formed relatively thick in the protective layer 300. For example, the second region 320 is formed with a second thickness t2. In this case, the second thickness t2 represents the shortest distance between one surface and the other surface of the second region 320 in the X-axis direction. And the second thickness t2 is an average thickness of the second region 320.

The second thickness t2 is greater than the first thickness t1. That is, the second region 320 is formed relatively thicker than the first region 310. For example, the second thickness t2 is formed to be greater than 20 µm, greater than 30 µm, greater than 35 µm, greater than 40 µm, greater than 45 µm, or greater than 50 µm.

The second region 320 extends from the first region 310. For example, the second region 320 extends from one side of the first region 310. The protective layer 300 may include two or more first regions 310, in which case the first regions 310 extending from both sides of the second region 320. Thus, the protective layer 300 may be formed so that its sides are relatively thin and its center is relatively thick.

The first region 310 is provided on the region formed with a relatively thick thickness in the electrode plate 200. The second region 320 is provided on the region formed with a relatively thin thickness in the electrode plate 200. A boundary of the first region 310 and the second region 320 may be located on the step formed on the electrode plate 200 and/or adjacent to the step. That is, the boundary of the first region 310 and the second region 320 may be located on the first step.

As illustrated in FIG. 5, at least a portion of the first region 310 may be provided on the coated portion A and another portion of first region 310 may be provided on the uncoated portion N. The first region 310 is formed with a relatively thin first thickness t1. Accordingly, even when the first region 310 is provided on the coated portion A, the first region 310 does not provide a large step on the coated portion A. Thus, the protective layer 300 may not apply a local force to the electrode plate 200 by forming a large step while being provided on the electrode plate 200.

As illustrated in FIG. 5, the second region 320 may be provided on the uncoated portion N. A third thickness t3 in the second region 320, which is the difference between the first thickness t1 and the second thickness t2, is less than or equal to the thickness T1 of the active material layer 220. In FIG. 5, an example is illustrated in which the third thickness t3 is equal to the thickness T1 of the active material layer 220, but the third thickness t3 is not limited thereto. In some examples, the third thickness t3 is 90% to 100% of the thickness T1 of the active material layer 220. Alternatively, the third thickness t3 may be formed to be about 0, 0.1 µm, 0.2 µm, 0.3 µm, 0.4 µm, 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, 2.0 µm, 2.1 µm, 2.2 µm, 2.3 µm, 2.4 µm, 2.5 µm, and 3.0 µm less than the thickness T1 of the active material layer 220.

Accordingly, the protective layer 300 may be provided by taking into account the step formed in the electrode plate 200 while resolving the thickness dispersion. In addition, the electrode 400 may be formed so that the sum of the thicknesses of the protective layer 300 and the electrode plate 200 is constant in the region provided with the protective layer 300. For example, in the region in which the protective layer 300 is provided, the sum of the thicknesses of the protective layer 300 and the electrode plate 200 may be formed such that a minimum value is 70% to 100% of the maximum value, or the sum of the thicknesses may be formed such that the minimum value to 80% to 100% of the maximum value, or the sum of the thicknesses may be formed such that the minimum value to 90% to 100% of the maximum value, or the sum of the thicknesses may be formed such that the minimum value is 100% of the maximum value. As such, in the region in which the protective layer 300 is provided, the electrode 400 may be formed with a constant thickness.

A surface of protective layer 300 may be formed flat. Accordingly, the other surface of the protective layer 300 may be formed while forming a step. The other surface of the protective layer 300 may face the electrode plate 200.

Accordingly, in the region in which the protective layer 300 is provided, the step formed on the electrode 400 may be minimized.

A width w1 of the second region 320 is less than or equal to the length W1 of the uncoated portion N. For example, the width w1 of the second region 320 is formed to be 80% to 100% of the length W1 of the uncoated portion N, or the width w1 of the second region 320 is formed to be 85% to 100% of the length W1 of the uncoated portion N, or the width w1 of the second region 320 is formed to be 90% to 100% of the length W1 of the uncoated portion N, or the width w1 of the second region 320 is formed to be 95% to 100% of the length W1 of the uncoated portion N. In other embodiments, the width w1 of the second region 320 is formed to be the same as the length W1 of the uncoated portion N.

Accordingly, the protective layer 300 may be formed such that the boundary of the first region 310 and the second region 320 is located on or adjacent to the first step. The protective layer 300 may more effectively protect the electrode plate 200 while reducing the formation of a new step on the electrode plate 200.

Through this structure, the protective layer 300 according to one embodiment of the present invention may reduce a thickness difference of the electrode plate 200, which may be a weak point of the electrode 400. Further, the protective layer 300 may delay the degradation time of the secondary battery 100 and/or reduce the degree of structural degradation.

As the secondary battery 100 includes a first electrode and a second electrode, one or more of the first electrode and the second electrode include the electrode 400 provided with the protective layer 300.

When the electrode 400 provided with the protective layer 300 is the positive electrode 10, the protective layer 300 may cover a portion of the active material layer 220 and the substrate 210. The protective layer 300 may reduce the first step (described above) formed on the positive electrode plate, and the protective layer 300 may reduce the second step (described above). Accordingly, the protective layer 300 may protect the electrode plate 200 and also address a problem of salt precipitation from the active material layer 220.

When the electrode 400 provided with the protective layer 300 includes the negative electrode 20, the protective layer 300 may cover the substrate 210. In such a case, the protective layer 300 may reduce the second step formed on the negative electrode plate, and the protective layer 300 protects the electrode plate 200.

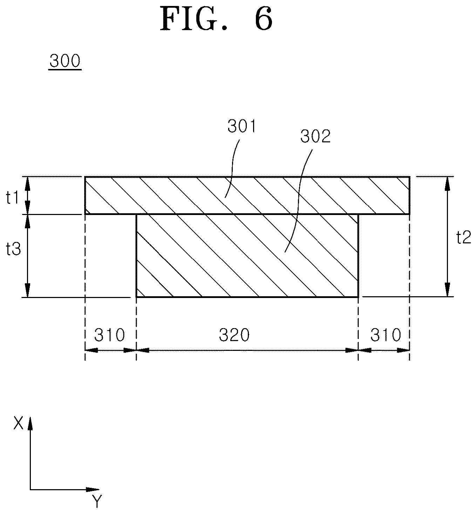

FIG. 6 is a view of a protective layer according to another embodiment of the present invention.

A protective layer 300 according to an embodiment of the present invention includes two or more regions formed with different thicknesses.

The protective layer 300 may be formed as a single structure. In one example, the protective layer 300 may be cut from a fabric formed with the second thickness t2 such that a portion thereof has the first thickness t1. Thus, the protective layer 300 may be formed as a single structure including the first region 310 and the second region 320.

In other examples, the protective layer 300 may be formed by stacking two or more layers. For example, the two or more layers include a first layer 301 and a second layer 302 as shown in FIG. 6.

The first layer 301 is included in the protective layer 300 and forms two or more regions formed with different thicknesses. For example, the first layer 301 forms the first region 310 and the second region 320.

For example, the first layer 301 may be formed with the first thickness t1. The second layer 302 is located below the first layer 301. That is, the first layer 301 is formed by being stacked on the second layer 302. The second layer 302 is formed with a narrower area than the first layer 301. Accordingly, at a boundary between the first layer 301 and the second layer 302, a step may be formed with a thickness equal to the second layer 302.

The second layer 302 forms the second region 320. And the second layer 302 may be formed with the third thickness t3, which is the difference between the second thickness t2 and the first thickness t1.

The first layer 301 and the second layer 302 may be fixed to each other by an adhesive. The adhesive may include, for example, one or more of a silicone-based resin, an acrylic-based resin, a urethane-based resin, a rubber-based resin, an epoxy resin, a polyolefin, and combinations thereof.

The protective layer 300 may be simply formed without a complex manufacturing process. In addition, the protective layer 300 may be compatible with electrode plates 200 having various sizes.

In still further embodiments, the protective layer 300 may be formed by stacking three or more layers. For example, the protective layer 300 may be formed by stacking a plurality of layers forming the first region 310 and the second region 320 and one layer forming the second region 320. Alternatively, the protective layer 300 may be formed by stacking one layer forming the first region 310 and the second region 320 and a plurality of layers forming the second region 320. In yet another example, the protective layer 300 may be formed by stacking a plurality of layers forming the first region 310 and the second region 320 and a plurality of layers forming the second region 320.

Each layer forming the protective layer 300 may include the same or different materials. And each layer forming the protective layer 300 may be formed with the same or different thicknesses.

Accordingly, the protective layer 300 may be applied to electrode plates 200 having various specifications. With this configuration, the protective layer 300 may provide the durability and tensile strength required for each electrode plate 200.

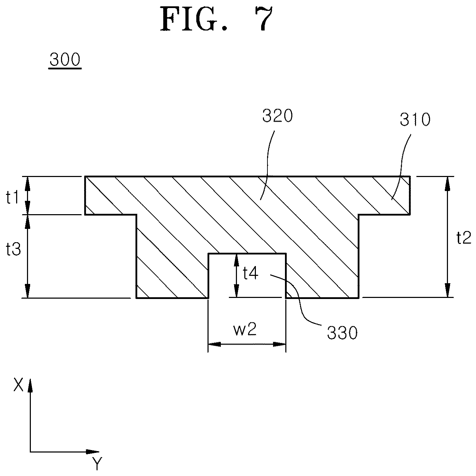

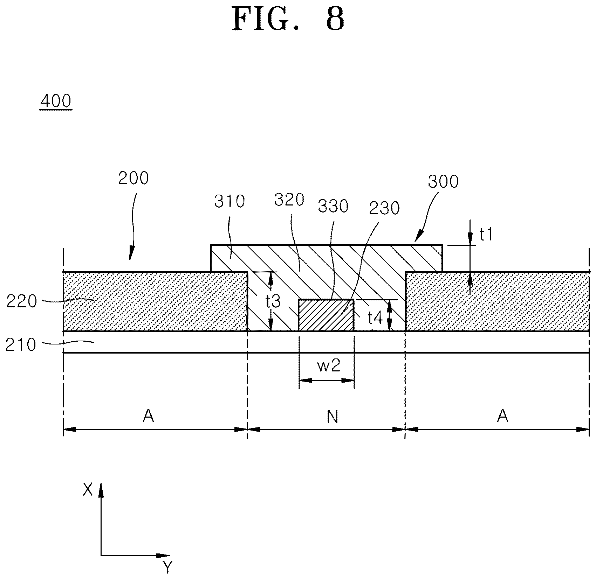

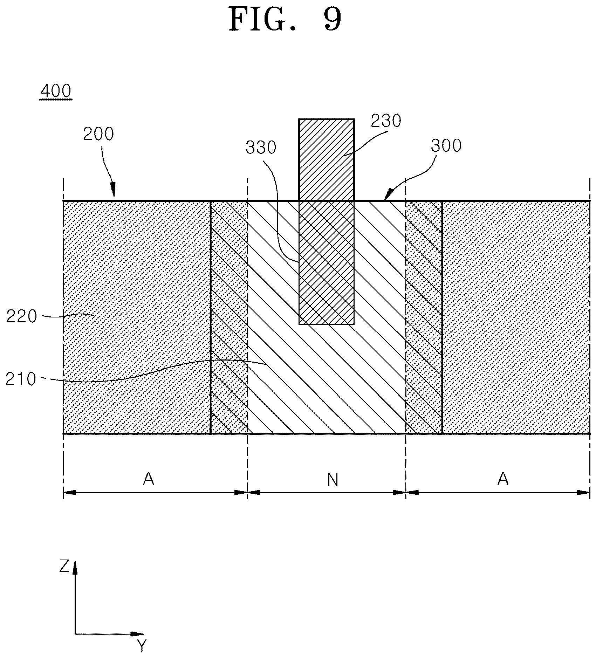

FIG. 7 is a view of a protective layer according to another embodiment of the present invention. FIG. 8 is a view of an electrode provided with a protective layer according to an embodiment of the present invention. FIG. 9 is a view of an electrode provided with a protective layer according to an embodiment of the present invention.

A secondary battery 100 according to one embodiment of the present invention includes an electrode 400. The electrode 400 according to an embodiment of the present invention includes an electrode plate 200 and a protective layer 300 provided on the electrode plate 200.

A step may be formed on the electrode plate 200. The step includes a first step formed at the boundary between the coated portion A and the uncoated portion N and formed by a thickness T1 of the active material layer 220. Additionally or alternatively, the step includes a second step formed at the boundary between the substrate 210 and the tab 230 and formed by a thickness T2 of the tab 230.

The protective layer 300 includes two or more regions having different thicknesses. In particular, the protective layer 300 includes a first region 310 formed with a first thickness t1 and a second region 320 formed with a second thickness t2. The protective layer 300 may alleviate the first step by ensuring that the boundary between the first region 310 and the second region 320 is positioned corresponding to the first step. Further, the protective layer 300 may provide a structure that alleviates the first step while simultaneously alleviating the second step. A structure for alleviating the second step by the protective layer 300 is described below.

The electrode 400 further includes a tab 230 mounted on a portion of the substrate 210. As described above, one side of the tab 230 is mounted on the uncoated portion N. The other side of the tab 230 extends outward. In an example, the tab 230 may be formed with a rectangular parallelepiped structure. However, the shape of the tab 230 is not limited thereto, and the tab 230 may be formed in any shape that is electrically connectable to the outside while being connected to the electrode plate 200.

As illustrated in FIG. 7, the protective layer 300 further includes a groove formed corresponding to the tab 230, and the protective layer 300 is provided on the substrate 210 while covering the tab 230. The groove includes a first groove 330. The first groove 330 is formed in a lower surface of the protective layer 300.

More specifically, the first groove 330 is formed in the lower surface of the protective layer 300 and extends in the Z-axis direction. Here, the lower surface of the protective layer 300 faces the electrode plate 200. For example, the first groove 330 is formed to connect a front surface to a rear surface of the protective layer 300. Here, the front surface of the protective layer 300 is the surface in an XY plane. In this case, the rear surface of the protective layer 300 is the other surface in the XY plane and a surface facing the front surface of the protective layer 300When viewed from the front or the rear, the protective layer 300 may be formed in a "π" shape.

Alternatively, the first groove 330 is formed in the lower surface of the protective layer 300 to extend in the Z-axis direction. For example, the first groove 330 is formed from the front surface of the protective layer 300When viewed from the front, the protective layer 300 may be formed in a "π" shape with a closed back. When viewed from the rear, the protective layer 300 may be formed in a shape in which a " 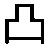 " shape is inverted.

The first groove 330 is formed to alleviate the second step formed by the tab 230 in the electrode plate 200. As such, the first groove 330 is formed corresponding to the tab 230, and the first groove 330 provides a space in the protective layer 300 into which the tab 230 may be inserted. Accordingly, the first groove 330 may be formed in the lower surface of the second region 320 to extend in the Z-axis direction.

A height t4 of the first groove 330 may corresponding to the thickness T2 of the tab 230. The height t4 of the first groove 330 may be formed to be the same as the thickness T2 of the tab 230. In this case, "the same" includes values within a tolerance range of ±5%.

A width w2 of the first groove 330 is formed corresponding to the width W2 of the tab 230. For example, the width w2 of the first groove 330 may be formed to be the same as the width W2 of the tab 230. In this case, "the same" includes values within a tolerance range of ±5%.

FIGS. 8 and 9 illustrate examples in which the protective layer 300 including the first groove 330 is provided on the electrode plate 200. As shown in FIG. 9, the first groove 330 is formed from the front surface of the protective layer 300 but does not extend to the rear surface.

The protective layer 300 is provided on the electrode plate 200 such that the tab 230 is coupled to the first groove 330. Accordingly, the protective layer 300 may alleviate the step formed on the electrode plate 200 while being positioned on the electrode plate 200 on which the step is formed.

As illustrated in FIG. 8, the protective layer 300 may alleviate the first step by including the first region 310 and the second region 320. Additionally, the protective layer 300 may be formed with a relatively thin first thickness t1 to minimize a step formed by the protective layer 300 itself. In addition, the protective layer 300 may alleviate the second step through the first groove 330.

With this structure, the electrode 400 according to one embodiment of the present invention may have a reduced or minimized thickness difference. In addition, the secondary battery 100 according to one embodiment of the present invention including the electrode 400 may improve the problem due to degradation.

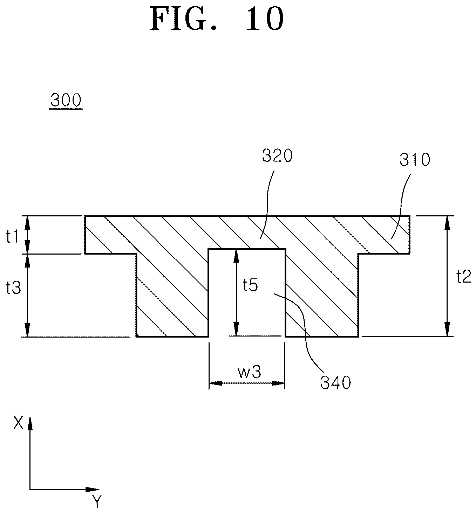

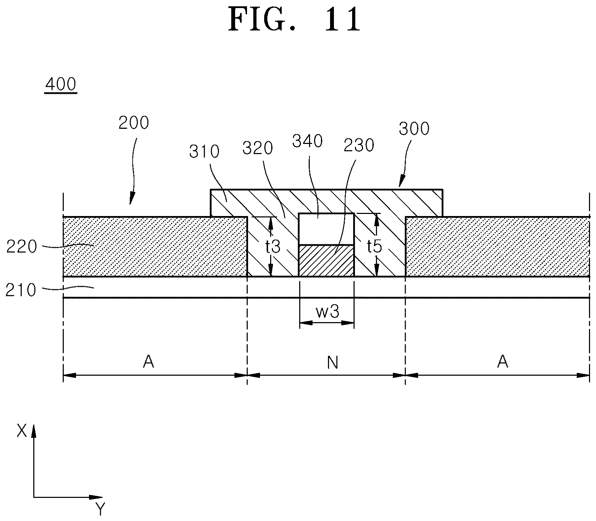

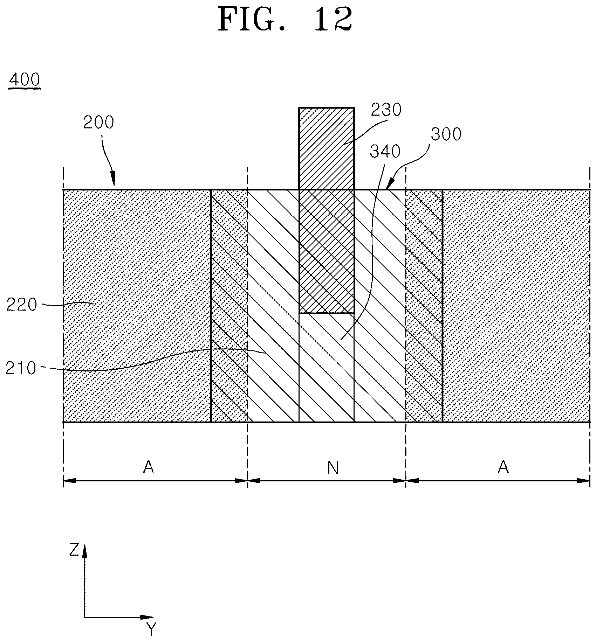

FIG. 10 is a view of a protective layer according to an embodiment of the present invention. FIG. 11 is a view of an electrode provided with a protective layer according to an embodiment of the present invention. FIG. 12 is a view of an electrode provided with a protective layer according to an embodiment of the present invention.

A secondary battery 100 according to an embodiment of the present invention includes an electrode 400. The electrode 400 includes an electrode plate 200 including a substrate 210 and an active material layer 220 provided on a portion of the substrate 210; and a protective layer 300 including two or more regions formed with different thicknesses and provided on the electrode plate 200.

As described above, the protective layer 300 may provide a structure that alleviates the first step and the second step. Hereinafter, a structure for alleviating the second step by the protective layer 300 is described.

The electrode 400 further includes a tab 230 mounted on a portion of the substrate 210 As illustrated in FIG. 10, the protective layer 300 includes a groove formed corresponding to the tab 230. The protective layer 300 is provided on the substrate 210 while covering the tab 230.

The groove includes a second groove 340 formed in a lower surface of the protective layer 300. That is, the second groove 340 is formed in the lower surface of the protective layer 300 and extends in the Z-axis direction. The second groove 340 is formed to connect a front surface to a rear surface of the protective layer 300. When viewed from the front or the rear, the protective layer 300 may be formed in a "π" shape.

Alternatively, the second groove 340 is formed in the lower surface of the protective layer 300 and extends in the Z-axis direction. For example, the second groove 340 is formed from the front surface of the protective layer 300. When viewed from the front, the protective layer 300 may be formed in a "π" shape with a closed back. When viewed from the rear, the protective layer 300 may be formed in a shape in which a " 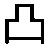 " shape is inverted.

The second groove 340 is formed to alleviate the second step formed by the tab 230 in the electrode plate 200 and is formed corresponding to the tab 230. In particular, the second groove 340 provides a space in the protective layer 300 into which the tab 230 may be inserted. Accordingly, the second groove 340 may be formed in the lower surface of the second region 320 to extend in the Z-axis direction.

A height t5 of the second groove 340 is greater than the thickness T2 of the tab 230 and less than the thickness T1 of the active material layer 220.

A width w3 of the second groove 340 corresponds to the width W2 of the tab 230. In some examples, the width w3 of the second groove 340 may be formed to be the same as the width W2 of the tab 230. In this case, "the same" includes values within a tolerance range of ±5%. Alternatively, the width w3 of the second groove 340 may be formed to be greater than the width W2 of the tab 230 within a range of 5 mm.

FIGS. 11 and 12 illustrate an example in which the protective layer 300 including the second groove 340 is provided on the electrode plate 200. As shown in FIG. 12, the second groove 340 extends from the front surface of the protective layer 300 to the rear surface.

The protective layer 300 is provided on the electrode plate 200 such that the tab 230 is coupled to the second groove 340. In this case, the second groove 340 provides a space slightly greater than or equal to the tab 230. Accordingly, the protective layer 300 may be provided on the electrode plate 200 and be easily aligned with respect to the electrode plate 200. The protective layer 300 may protect the electrode plate 200 from the outside while also providing a space for the electrode plate 200 to contract or expand.

Accordingly, the protective layer 300 may alleviate the step formed on the electrode plate 200 while being positioned on the electrode plate 200 on which the step is formed.

As illustrated in FIG. 11, the protective layer 300 may alleviate the first step by including the first region 310 and the second region 320. Additionally, the protective layer 300 may be formed with a relatively thin first thickness t1 to minimize a step formed by the protective layer 300 itself. In addition, the protective layer 300 may alleviate the second step through the second groove 340.

With this structure, the electrode 400 may have a reduced or minimized thickness difference. In addition, the secondary battery 100 including the electrode 400 may improve the problem due to degradation.

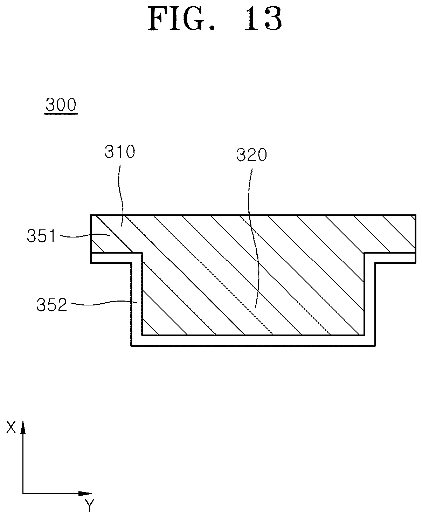

FIG. 13 is a view of a protective layer according to another embodiment of the present disclosure.

A protective layer 300 includes two or more regions formed with different thicknesses. As described above, the protective layer 300 protects an electrode plate 200. For example, the protective layer 300 prevents a short circuit from occurring in the electrode 400. Accordingly, the protective layer 300 is required to have insulating properties. As such, the protective layer 300 includes an insulating layer 351. that includes an insulating material. The insulating material may include at least one of polyimide (PI), polysulfone, polyurethane (PU), polyamide (PA), 6,6 nylon, polycarbonate (PC), polytetrafluoroethylene (PTFE), polymethyl methacrylate (PMMA), and polyethylene terephthalate (PET).

The protective layer 300 may further include an adhesive layer 352 so that the insulating layer 351 may be attached to the electrode plate 200. The adhesive layer 352 is formed on one surface of the insulating layer 351. The one surface of the insulating layer 351 is a surface facing the electrode plate 200. The adhesive layer 352 may attach the insulating layer 351 to the electrode plate 200. Accordingly, the adhesive layer 352 includes an adhesive material. The adhesive material may include at least one of silicone-based resin, an acrylic-based resin, a urethane-based resin, a rubber-based resin, an epoxy resin, a polyolefin, and combinations thereof. The acrylic-based resin may include acrylic, ester copolymers, ethyl acrylate, butylacrylate, hexylacrylate, n-octylacrylate, isooctyl acrylate, 2-ethylhexylacrylate, isononyl acrylate, lauryl acrylate, acrylic acid, maleic acid, fumaric acid, itaconic acid, kryptonic acid, acrylamide, N-vinyl pyrrolidone, N-vinyl caprolactam, acrylonitrile, acryloyl corpoline, 2-hydroxylethyl acrylate, 2-hydroxypropyl acrylate, 2-hydroxybutylacrylate, or the like. The urethane-based resin may include polyurethane or the like. The rubber-based resin may include natural rubber, synthetic rubber, or the like.

The first region 310 includes the insulating layer 351 and the adhesive layer 352. In other embodiments, the second region 320 includes the insulating layer 351 and the adhesive layer 352. In this case, the insulating layer 351 included in the first region 310 and the insulating layer 351 included in the second region 320 may be connected. For example, the adhesive layer 352 included in the first region 310 and the adhesive layer 352 included in the second region 320 may be connected.

With this configuration, the protective layer 300 may be provided on the electrode plate 200. Thus, the protective layer 300 may alleviate the step formed on the electrode plate 200 by including regions having different thicknesses. In addition, the electrode 400 may not be damaged by including the electrode plate 200 provided with the protective layer 300. In addition, the secondary battery 100 having the electrode plate 200 with the protective layer 300 may have improved degradation time and an improved lifetime by including the electrode 400.

According to embodiments of the present invention, the reliability of an electrode and/or a secondary battery can be improved.

According to embodiments of the present invention, the onset of degradation that occurs as the charge/discharge cycles of an electrode and/or a secondary battery progress can be reduced.

According to embodiment of the present invention, the degree of structural degradation of an electrode and/or a secondary battery can be delayed.

However, technical effects acquirable through the present invention are not limited to the above-described technical effects, and other technical effects which are not mentioned will be clearly understood by those skilled in the art from the description of the invention described below.

Although the present invention has been described above with references to embodiments and drawings, the present invention is not limited thereto. Various modifications and variations are possible within the scope of the present invention by those skilled in the art to which the present invention pertains.

## Claims

1. An electrode (400) comprising:
an electrode plate (200) including a substrate (210) and an active material layer (220) disposed on a portion of the substrate (210); and
a protective layer (300) including two or more regions having different thicknesses and provided on the electrode plate (200).

2. The electrode (400) according to claim 1, wherein the electrode plate (200) includes a coated portion (A) where the active material layer (220) is formed on the portion of the substrate (210) and an uncoated portion (N) at another portion of the substrate (210), and
wherein the two or more regions includes a first region (310) at least partially provided on the coated portion (A) and formed with a first thickness (t1), and a second region (320) provided on the uncoated portion (N) and formed with a second thickness (t2) that is greater than the first thickness (t1).

3. The electrode (400) according to claim 2, wherein a difference between the first thickness (t1) and the second thickness (t2) is less than or equal to a thickness (T1) of the active material layer (220).

4. The electrode (400) according to claims 2 or 3, wherein a difference between the first thickness (t1) and the second thickness (t2) is 90% to 100% of the thickness (T1) of the active material layer (220).

5. The electrode (400) according to any of claims 2 to 4, wherein a width of the second region (320) is less than or equal to a length of the uncoated portion (N).

6. The electrode (400) according to any of claims 2 to 5, wherein the first region (310) extends from one side or both sides of the second region (320).

7. The electrode (400) according to any of the preceding claims, wherein the protective layer (300) includes:
a first layer (301), a portion of which forms the first region (310); and
a second layer (302) located below the first layer (301) and formed with a narrower area than the first layer (301), and with the second layer (302) forming the second region (320) such that the two or more regions of the protective layer (300) are formed with the different thicknesses.

8. The electrode (400) according to any of the preceding claims, further comprising a tab (230) mounted on the substrate (210),
wherein the protective layer (300) further includes a groove (330, 340) corresponding to the tab (230) and covers the tab (230).

9. The electrode (400) according to claim 8, wherein a height (t4) of the groove (330) corresponds to a thickness (T2) of the tab (230).

10. The electrode (400) according to claim 9, wherein the height (t5) of the groove (340) is greater than the thickness (T2) of the tab (230) and less than a thickness (T1) of the active material layer (220).

11. The electrode (400) according to any of the preceding claims, wherein the protective layer (300) includes an insulating layer (351) and an adhesive layer (352) formed on one surface of the insulating layer (351), with the adhesive layer (352) attaching the insulating layer (351) to the electrode plate (200).

12. A secondary battery (100) comprising:
a case (50); and
an electrode assembly (40) accommodated in the case (50), the electrode assembly (40) including a wound first electrode, a second electrode, and a separator (30) that is positioned between the first electrode and the second electrode
wherein one or more of the first electrode and the second electrode include the electrode (400) according to any preceding claim.
